(19)

**Europäisches Patentamt**

**European Patent Office**

**Office européen des brevets**

(11)  **EP 2 924 426 A1**

(12)  **EUROPEAN PATENT APPLICATION**

(43) Date of publication:
**30.09.2015 Bulletin 2015/40**

(51) Int Cl.:
***G01N 27/90*** *(2006.01)*

(21) Application number: **15161205.8**

(22) Date of filing: **26.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **28.03.2014 GB 201405650**

(71) Applicant: **Technical Software Consultants Limited**
**Buckinghamshire MK5 8PB (GB)**

(72) Inventors:
• **Parramore, David**
**Milton Keynes, Buckinghamshire MK5 8PB (GB)**
• **Blakeley, Bruce**
**Milton Keynes, Buckinghamshire MK5 8PB (GB)**
• **Smith, Michael**
**Milton Keynes, Buckinghamshire MK5 8PB (GB)**

(74) Representative: **Potter, Julian Mark**
**WP Thompson**
**55 Drury Lane**
**London WC2B 5SQ (GB)**

(54) **ALTERNATING CURRENT FIELD MEASUREMENT SYSTEM**

(57)     An a.c. field measurement system and method are disclosed. The system comprises an arrangement 6 for inducing an a.c. field in a conductor 2 and a sensor, for example coil 8, responsive to the a.c. field to produce a signal indicative of the a.c. field. The system further comprises circuitry 18 configured to apply a phase shift to the signal by an amount suitable to reduce a component of the signal dependent on the distance of the sense coil 8 from the conductor 2. The circuitry may be implemented by digital circuitry and/or analogue circuitry.

Fig. 1

EP 2 924 426 A1

**Description**

<u>Field</u>

The present invention relates to an a.c. field measurement (ACFM) system, in particular, but not exclusively, to an ACFM system for detecting and/or sizing defects in a conductor.

<u>Background</u>

ACFM is an electromagnetic non-destructive technique used for the detection and sizing of surface breaking cracks in conductive materials, such as metals. The technique has particular application in detecting and sizing surface breaking cracks in ferrite steel structures without requiring access to or contact with the bright metal. Therefore, the technique removes the need to carry out extensive pre-cleaning of the area to be inspected or the removal of protective paint layers, for example.

A known system developed by the applicant is disclosed in international patent application publication number WO 92/12422 which teaches an ACFM system for detecting and sizing defects in a conductor utilising a probe including: an arrangement for inducing a uniform field, at least uniform within the tolerances of manufacture of the arrangement and the configuration of conductor under test a.c. field, a plurality of sensors responsive to the field for producing signals indicative of defects in a conductor and also apparatus for effecting energisation of the field.

The applicant has also disclosed in European patent application publication number EP 0 566 624 an ACFM system for inducing an alternating signal current and having sensors comprising first and second coils located in a probe. A yoke is included in the probe for inducing a uniform a field in a first direction with the first coil disposed so that a longitudinal axis of thereof extends in the first direction. The second coil is positioned so that its longitudinal axis extends the second direction orthogonal to the first direction. A processor is also included for processing signals produced by the coils indicative of defects in a test piece such that one component of magnetic field is plotted against another on a display.

The distance of a sensor from the conductor under test may vary during a test, for example due to variations in the thickness of a coating over the conductor such as paint. Such variation in distance of the sensor from the conductor under test results in a reduction of the signal sensed for the defect due to a second sensed signal dependent on the distance of the sensor from the conductor destructively interfering with the signal sensed for the defect.

Aspects and embodiments of the present invention were devised with the foregoing in mind.

<u>Summary</u>

Viewed from a first aspect, there is provided an a.c. field measurement system, comprising: an arrangement for inducing an a.c. field in a conductor; a sensor responsive to the a.c. field to produce a signal indicative of the a.c. field; and circuitry configured to phase shift the signal by an amount suitable to reduce a component of the signal dependent on the distance of the sensor from the conductor.

Viewed from a second aspect, there is provided a method for a.c. field measurement, comprising: inducing an a.c. field in a conductor; sensing a signal indicative of the a.c. field; and phase shifting the signal by an amount suitable to reduce a component of the signal dependent on the distance from the conductor at which sensing occurs.

Embodiments in accordance with the first and second aspects may reduce sensitivity of the measurement system to variations in height of the sensor above a conductor. This in effect reduces noise, the liftoff response, due to the variation in height, the liftoff, and improves accuracy of the ACFM measurement value. In particular, the ACFM measurement value is less sensitive to an operator's hand being unsteady or to variations in paint thickness of a piece under inspection, for example.

One or more embodiments have particular application in nondestructive testing in which the signal is indicative of a defect in the conductor. Due to reduced sensitivity to liftoff response, the system may be more sensitive to defects and be capable of indicating smaller defects or defects deeper in the body of the inspection piece than would otherwise be the case.

Suitably, the distance of the sensor from the conductor is the distance from a surface of the conductor opposing the sensor as the surface of the conductor provides a useful datum. In this regard, it should be understood that the surface of the conductor from which the distance is measured is in effect a "nominal" surface smoothing out minor variations in the surface profile. However, defects can be detected with depth of 2-3mm even with liftoff variations of a similar magnitude.

Typically, the sensor is configured to be movable in a direction across the conductor. For example, the sensor may be movable relative to the conductor in a direction substantially parallel to the surface of the conductor. Although generally the sensor is moved relative to a piece under inspection it is possible for the sensor to be stationary and the inspection piece moved relative to it.

Optionally or additionally one or more embodiments may have probes comprised of a number of sensors fixed in a linear array. Such a multi sensor probe is applied to a surface and the data may be collected while the probe is stationary. i.e. no motion in either probe, sensor or conductor under test.

In one or more embodiments the system and/or sensor may be mounted on a carriage. Additionally or alternatively, a piece under inspection may be mounted on a carriage.

In one or more embodiments, the arrangement is configured to induce an a.c. field of uniform field strength which provides for a more consistent and therefore accurate detection of a defect. The a.c. field may be of uniform field strength over an area sufficiently large to smooth out local variations in the surface geometry of the conductor but sufficiently small to resolve curvature or other gross geometry effects of the conductor thereby further improving the accuracy of detecting a defect.

In one or more embodiments the circuitry comprises a processor. A processor provides versatility and may be used for controlling energisation of the field inducing arrangement, variation in the phase of the detected signal and to move the sensor/system relative to the piece under inspection.

In one or more embodiments the processor comprises a digital signal processor. A digital signal processor may be optimised to perform calculations on data and is particularly suitable for an embodiment of the invention comprising an algorithmic implementation.

An algorithmic implementation may utilise the following relationship to determine an ACFM measurement value:

$$ACFM = 2f \int_{-\frac{\beta}{2\pi f}}^{\frac{1}{2f} - \frac{\beta}{2\pi f}} Bx(t)\, dt$$

where $f$ is the frequency of the induced field, $\beta$ is the phase shift applied to the signal, $Bx(t)$ is the value of the signal indicative of the a.c. field and *ACFM* is the alternating current field measurement value.

Optionally, the circuitry comprises a circuit arrangement configured to switch between the signal and the inverse of the signal at the same frequency as the a.c. field at a phase difference relative to the phase of the a.c. field by a difference amount suitable to reduce a component of the signal dependent on the distance of the sensor from the conductor. In a particular circuit arrangement there is provided a switch responsive to an a.c. signal at the same frequency as the a.c. field to switch between a first and second pole respectively coupled to the signal and the inverse of the signal. The a.c. signal causing the switching may be a square wave.

Typically, the signal is input to a circuit element having a positive gain polarity and a circuit element having a negative gain polarity the output of respective circuit elements coupled to respective poles of the switch. Suitably, respective circuit elements comprise an operational amplifier and an operational amplifier configured as an inverter.

A low pass filter for removing a d.c component from the switched signal may be provided.

In one or more embodiments of the invention the sensor comprises at least one coil and may comprise a plurality of coils producing respective signals indicative of the a.c. field and wherein a respective phase shift is applied to the signal from each coil.

Viewed from a third aspect there is provided an a.c. field measurement system, comprising: an arrangement for inducing an a.c. field in a conductor; a sensor including at least one coil responsive to the a.c. field to produce a signal indicative of the a.c. field; and circuitry configured to phase shift the signal across a range of phases for a specific location of the sensor relative to the conductor. Viewed from a fourth aspect there is provided a method for a.c. field measurement system, comprising: inducing an a.c. field in a conductor; sensing a signal indicative of the a.c. field; and phase shifting the signal across a range of phases for a specific location of performing sensing relative to the conductor.

Embodiments in accordance with the third and fourth aspect comprise a calibration mode and typically the specific location is a one of: a defect in the conductor; a non-defect part of the conductor; and a location away from the surface of the conductor.

Typically, in the calibration mode, the system is configured to evaluate: a defect response for respective phase shift values in the range of phases corresponding to the difference between the signal when the location is at a defect in the conductor and the signal when the location is at a non-defect part of the conductor; and a liftoff response for respective phase shift values in the range of phases corresponding to the difference between the signal when the location is away from the conductor and the signal when the location is at a non-defect part of the conductor.

In accordance with one or more embodiments of the invention, the system comprises processor circuitry configured to determine from the range of defect responses and liftoff responses a phase shift value for which the liftoff response is small and the defect response is relatively large.

List of Figures

One or more embodiments in accordance with the present invention will now be described, by way of example only, with reference to the accompanying drawings, in which:

Figure 1 is a schematic cross-section illustration of an a.c. field measurement sensor head disposed above an inspection piece;

Figure 2 is a graphical illustration of the variation in the electrical signal from a sense coil 8 as a probe head 10 traverses an inspection piece;

Figure 3 is a schematic illustration of (a) a series of a.c. magnetic field values measured in the phase domain, and (b) a square wave shifted by a phase β relative to the magnetic field;

Figure 4 is a schematic illustration of (a) a square wave 90° out of phase with a sine wave, and (b) a square wave multiplied with the sine wave of 4(a);

Figure 5 is a schematic illustration of (a) a square wave 90° in phase with a sine wave, and (b) a square wave multiplied with the sine wave of 5(a);

Figure 6 is a schematic illustration of the background, defect and liftoff signals measured with an embodiment in accordance with the invention;

Figure 7 is a schematic illustration of the liftoff and the defect response is evaluated in accordance with an embodiment of the invention;

Figure 8 is a schematic illustration of the ACFM signal Bx(t) and phase shift detected square wave superimposed upon each other;

Figure 9 is a schematic illustration of circuitry in accordance with a first embodiment of the invention;

Figure 10 is a schematic illustration of circuitry in accordance with a second embodiment of the invention;

Figure 11 is a process flow control diagram for a calibration mode in accordance with an embodiment of the invention; and

Figure 12 is a process flow control diagram for a measurement mode in accordance with an embodiment of the invention.

Description

An ACFM sensor in accordance with an embodiment of the present invention will now be described.
In general outline, the ACFM sensor generates an electromagnetic field, hereinafter referred to as the "primary" field, in the frequency range 5 - 100kHz parallel to the surface of the article to be inspected, the so-called "inspection piece". The primary field is generated by an inducer coil 6. The primary field induces an a.c. current in the inspection piece which results in a secondary magnetic field. The magnetic field sensor is placed just above the inspection piece, at a fixed distance - typically 2mm. The a.c. field sensor produces a signal known as Bx(t), which is affected by the distance of the a.c. field sensor from the inspection piece known as "liftoff" and which produces a so-called "liftoff signal", the defect geometry which produces a so-called "defect signal" and the background signal of the a.c. field away from a defect. The signal produced by the a.c. field sensor is also influenced by the length of the defect. The ACFM system in accordance with an embodiment of the invention uses the ratio of defect signal to background signal to determine the depth of the defect. However, in order to determine this ratio accurately, the liftoff signal should be removed, and the time varying signal reduced to a scalar quantity. This may be achieved by averaging resultant signals to provide one ACFM point (a scalar value) represented by the following equation:

$$ACFM = \overline{Bx(t) \cdot S(t)} . \tag{1}$$

Where S(t) is the square wave offset by a phase difference from the Bx field selected, as will be described later, to result in a reduced liftoff effect.

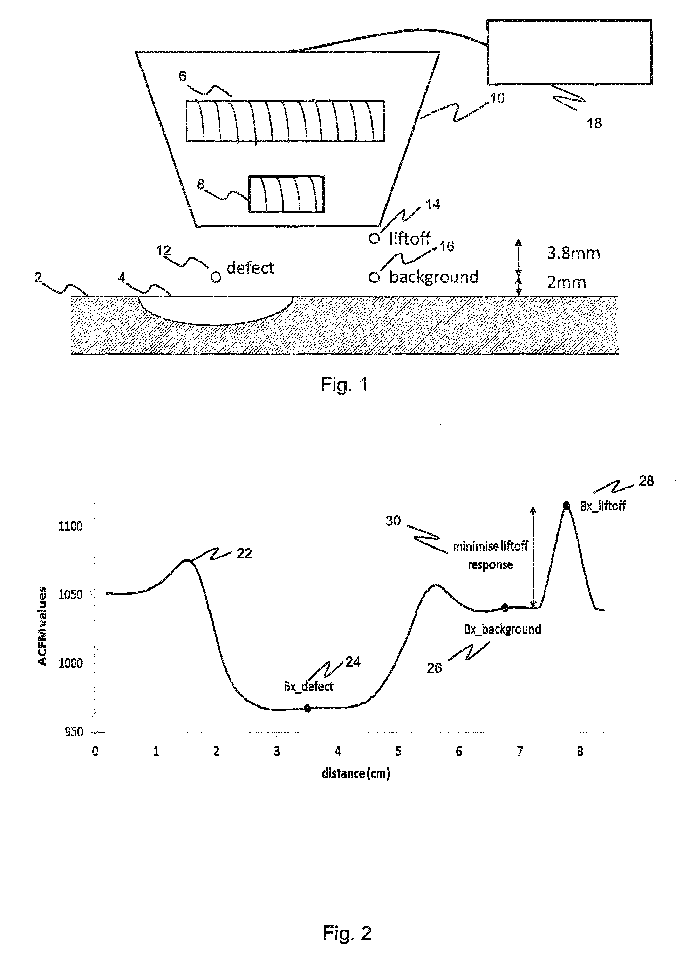

Referring now to figure 1, there is illustrated in cross-section the arrangement of a sensor head of a probe movable with respect to a surface of a steel plate which is undergoing inspection; a so-called "inspection piece". The inspection piece 2 contains a semi-elliptical crack 4. The inducer coil 6 energisable to produce an alternating magnetic field is disposed within the sensor head 10 of the probe. A sense coil 8 is also included in the sensor head 10.

The probe may be moved so that the sensor head 10 traverses crack 4 at a substantially constant defect height 12. Sense coil 8 senses the a.c. field corresponding to the crack 4 and produces an electrical signal proportional thereto, the so-called "defect signal". The sensor head 10 may then be moved away from the crack 4 where the sense coil 8 may register an electrical signal proportional to the a.c. field away from the defect, the so-called "background signal", at background height 16. Typically, the probe head is positioned such that sense coil 8 is moved at a constant height over the inspection piece 2. This constant height provides a gap between the sense coil 8 on the surface of inspection piece 2 and is known as the "liftoff".

Occasionally, the sensor head 10 may be moved irregularly over the inspection piece 2 surface, for example, because an operator's hand is unsteady or if the thickness of paint on the surface of inspection piece 2 is uneven. Thus, the liftoff also varies. For example, as illustrated in figure 1, the liftoff height 14 is greater than the defect height 12 and background height 16. The electrical signal from sense coil 8 is affected by variations of liftoff height during an inspection procedure. The variation in the electrical signal produced by sense coil 8 is a source of noise known as the "liftoff response". As will be evident to the ordinarily skilled person, the liftoff height 14 will not necessarily be at a single height but may vary as the probe head 10 traverses the inspection piece 2. The "liftoff response" derives, at least in part, from the fact that the secondary magnetic field produced by the eddy currents induced in the inspection piece by the primary field varies in phase with liftoff height. Electronic instrumentation provides the signal to energise coil 6 and also receives signals from sense coil 8. Electronic instrumentation 18 also comprises electronic circuitry for processing signals received from sense coil 8, such as a digital signal processor for example, and also electronic memory.

Figure 2 is a graphical illustration of the variation in the electrical signal from sense coil 8 as probe head 10 traverses crack 4 at a constant defect height 12 and background height 16 to a position where the liftoff height 14 is increased. The Y axis is ACFM value and the X axis is the distance the probe 10 traverses across inspection piece 2. As the probe scans across inspection piece 2 the ACFM values increase approaching the edge of crack 4 and then substantially decrease as the probe head 10 traverses the crack to a minimum ACFM magnitude value corresponding to defect magnetic flux measurement Bx_defect 24 illustrated in figure 2. As the probe head 10 continues to traverse the inspection piece 2 it records an ACFM value corresponding to a background magnetic flux measurement $B_x$_background 26.

The probe head 10 continues scanning and is lifted away from the inspection piece 2 such that an ACFM value corresponding to a liftoff magnetic flux measurement $B_x$_liftoff 28 may be recorded. The difference between the ACFM value for the background magnetic flux measurement and the liftoff magnetic flux measurement is known as the liftoff response 30.

As the liftoff response 30 is a source of noise, it is desirable for the response to be minimised. The present inventors have devised an approach to minimising the liftoff response based upon adjusting the phase of the electrical signal produced by sense coil 8.

The inventors have devised an approach to reducing liftoff response by taking account of and compensating for the phase difference between the secondary field sensed when the probe is in the normal test position, i.e. normal height from the inspection piece indicated as "defect" 12 and "background" 16 in figure 1, and at a liftoff height diagrammatically represented as "liftoff" 14 in figure 1. The approach taken by the inventors is based on a so-called "phase sensitive detection" approach and the general principles of phase sensitive detection will be described as background to the later description of embodiments of the invention.

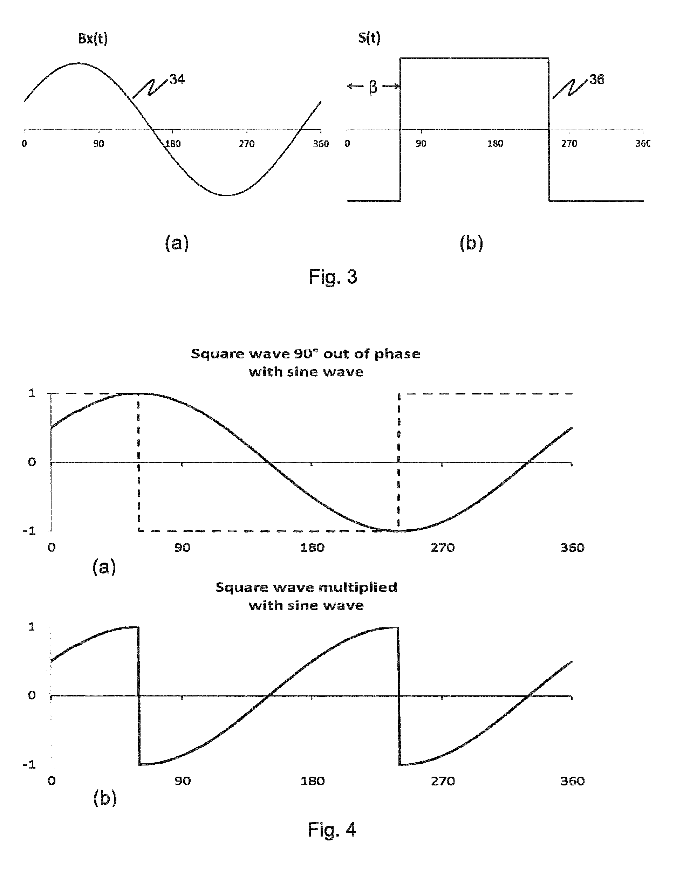

The sensor signal, Bx(t) 34, is sinusoidal, as shown in figure 3(a). It is multiplied with a square wave 36 illustrated in figure 3 (b) which may be generated by the ACFM system circuitry. Optionally, the square wave may be generated locally in the sensor head 10.

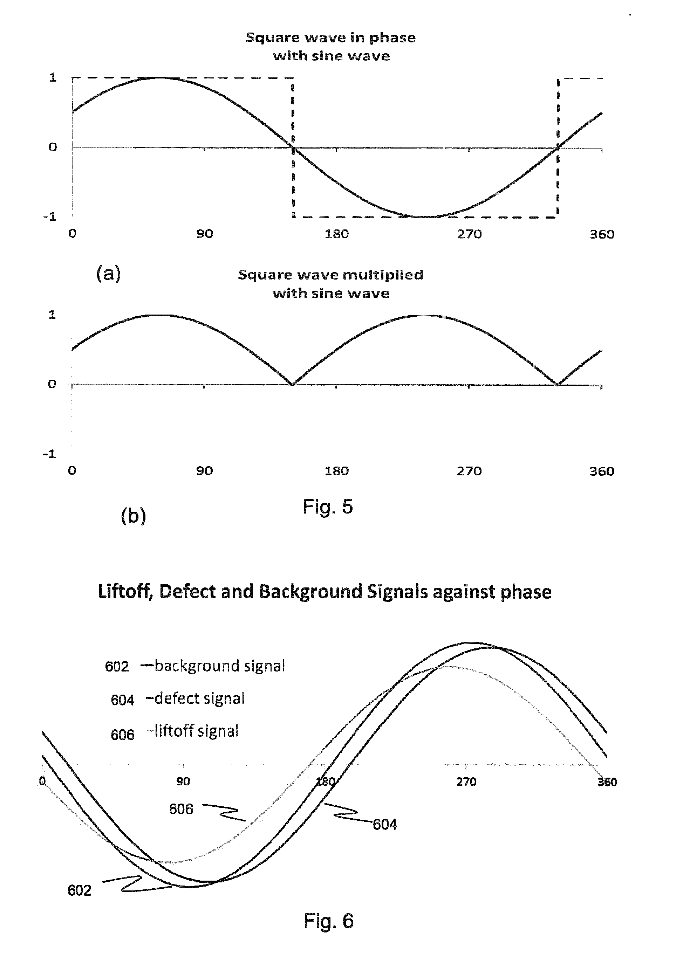

A schematic illustration of a sine wave superimposed with a square wave 90☐ out of phase with the sine wave is provided in figure 4(a) and a schematic illustration of the resultant signal waveform for the sine wave multiplied by the square wave 90° out of phase with the sine wave is illustrated in figure 4(b). As can be seen from figure 4(b) the average value of a sine wave multiplied by a 90° out of phase square wave is zero. In comparison, figure 5(a) illustrates a square wave in dotted outline superimposed in phase on a sine wave shown in solid outline. Figure 5(b) illustrates the resultant waveform when the in phase square wave and sine wave are multiplied. As can be seen from figure 5(b) the average signal is non-zero and is at a maximum value due to the multiplication with the in phase square wave.

The foregoing described method is known as "phase locking" and the present inventors have recognised that it may be used to remove the phase sensitive contribution of the liftoff response to the resultant signal sensed by sensor 8.

Referring back to figure 1 and figure 2, the liftoff response 30 has a phase characteristic. The phase characteristic is a consequence of the difference in measurement height at the background position and at the unwanted "liftoff response" position and results from the phase difference between the magnetic flux at the background position measurement height and the measurement height at the liftoff position. The phase characteristic distinguishes the liftoff response from the response to the secondary field magnetic flux (Bx_defect) 24 caused by eddy currents at and around defect 4 and the secondary field magnetic flux (Bx_background) 26 caused by eddy currents near the surface of inspection piece 2 both measured at respective inspection liftoff distances 12, 16 (2 mm in the described embodiment). The phase characteristic of the liftoff response is referred to as "beta" ($\beta$) and may be determined experimentally for each sensor 8 of a probe.

The trigonometric evaluation of the liftoff response phase characteristic $\beta$ from a measurement of the magnetic field strength is provided below with reference to the waveform Bx(t) labelled reference 22 in figure 2. The waveform, Bx(t), can be expressed as a summation of sine and cosines:

$$Bx(t) = Bx_A \cos(\omega t) + Bx_B \sin(\omega t) \qquad (2)$$

Where w = $2\pi$ x frequency (5- 100 kHz). For convenience, Bx_liftoff = BL and Bx_background = BP. The liftoff response can be expressed as:

$$BL(t) - BP(t) = BL_A \cos(\omega t) + BL_B \sin(\omega t) - BP_A \cos(\omega t) - BP_B \sin(\omega t) \quad (3)$$

When $\omega t = \beta$, the liftoff response is minimised:

$$BL_A \cos(\beta) + BL_B \sin(\beta) - BP_A \cos(\beta) - BP_B \sin(\beta) = 0 \qquad (4)$$

Which gives the following evaluation for the value of $\beta$ in terms of the magnetic field values at the liftoff and background positions respectively:

$$tan(\beta) = - \frac{BL_A - BP_A}{BL_B - BP_B} \qquad (5)$$

For the liftoff signal and background signal to be in phase $\beta$ is equal to $n\pi$, where n is an even number including zero, and tan($n\pi$) is equal to +/-1. Therefore the right-hand side of equation (5) should tend towards +/-1.

In working an embodiment of the invention the phase characteristic of the liftoff response is determined with respect to the supply current for energising coil 6. As the value of $\beta$ is dependent upon respective probe geometries and therefore will vary from probe to probe and indeed sensor to sensor for a multi-sensor probe, calibration has to be conducted for each probe or sensor in a probe head.

For the described embodiment, calibration is conducted for each sensor 8 in a probe with reference to a steel plate with an artificial defect such as illustrated in figure 2. The optimum value of $\beta$ is determined by empirical iteration; otherwise known as "trial & error". The calibration procedure is based on the premise that if a liftoff signal is phase shifted by an appropriate amount, i.e. $\beta$ as an optimum value, any variation in liftoff will not affect a sensor signal, i.e. a probe reading.

The probe head 10 is positioned at each of the defect, 12, background, 16, and liftoff, 14, positions for a steel plate configured as illustrated in figure 1. At each defect, background and liftoff position the phase of the sensor signal is swept across a range of phase values relative to the phase of the energising signal, typically relative to the phase of the current of the energising signal, for producing the primary field. An illustrative example of the background, 602, the defect, 604, and liftoff, 606, signals against phase offset from the energising signal is shown in figure 6. It can be seen that the phase is different for each of the background, 602, the defect, 604, and the liftoff, 606, signals.

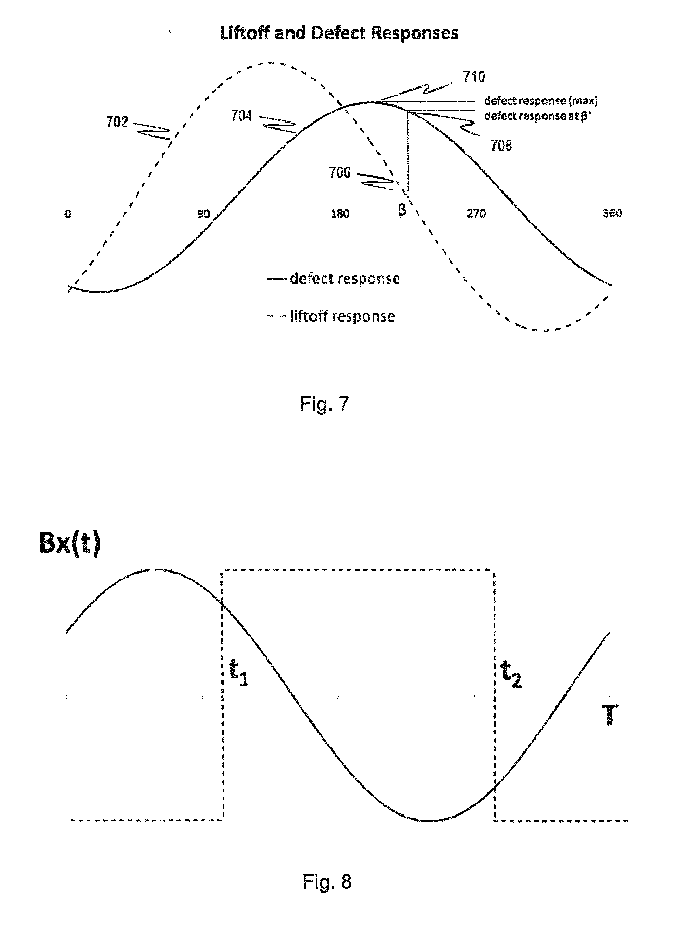

The liftoff response is the liftoff signal 606 minus the background signal 602, while the defect response is the background signal 602 minus the defect signal 604. An example of the resultant waveforms, liftoff response labelled 702 and defect response 704, is illustrated in figure 7.

The waveforms illustrated in figure 7 are close to an optimum value for β. At the optimum value of β, 706, the magnitude of the liftoff response is zero, while the magnitude of the defect response 708 is only slightly less than its maximum value 710. That is to say, the probe is slightly less sensitive to defects, while far more insensitive to liftoff. In practice the value of β is chosen so that the liftoff response is small and positive with respect to the defect response.

An ACFM measurement point is calculated by multiplying the probe signal, Bx(t), by a square wave, S(t), offset by a phase β set forth in equation (1) above and repeated here for convenience.

$$ACFM = \overline{Bx(t).S(t)} \qquad (6)$$

Bx(t) is a continuous function; its average between $t_1$ and $t_2$ can be expressed as:

$$\overline{Bx(t)} = \frac{1}{t_2 - t_1} \int_{t_1}^{t_2} Bx(t) \; dt \qquad (7)$$

Where $t_1$ and $t_2$ are the crossing points of the square wave and the square wave value between these points is one.

$$ACFM = \overline{Bx(t).S(t)} = \frac{1}{t_2 - t_1} \int_{t_1}^{t_2} Bx(t) \; dt \qquad (8)$$

But $t_1$ and $t_2$ are spaced one half time period 'T' apart.

$$t_2 - t_1 = \frac{T}{2} \qquad (9)$$

The time period 'T' is the inverse of the carrier frequency (f). The carrier frequency is typically in the range 5 to 100 kHz.

$$\frac{1}{t_2 - t_1} = 2f \quad and \quad t_2 = t_1 + \frac{1}{2f} \qquad (10)$$

Therefore...

$$\overline{Bx(t).S(t)} = 2f \int_{t_1}^{t_1 + \frac{1}{2f}} Bx(t) \, dt \qquad (11)$$

The value of $t_1$ can be determined from the square wave:

$$S(t) = \frac{sin(2\pi f t + \beta)}{|sin(2\pi f t + \beta)|} \qquad (12)$$

At the crossing point, $t = t_1$.

$$S(t_1) = 0 \qquad (13)$$

Therefore

$$sin(2\pi f t_1 + \beta) = 0 \qquad (14)$$

$$t_1 = \frac{-\beta}{2\pi f} \qquad (15)$$

And

$$t_2 = \frac{1}{2f} - \frac{\beta}{2\pi f} \qquad (16)$$

The final ACFM equation:

$$ACFM = \overline{Bx(t).S(t)} = 2f \int_{-\frac{\beta}{2\pi f}}^{\frac{1}{2f} - \frac{\beta}{2\pi f}} Bx(t)\, dt \qquad (17)$$

which yields an ACFM value with very little contribution from the liftoff response. The implementation of this equation in appropriately configured circuitry allows the liftoff response to be effectively removed from the ACFM value.

The applicant has developed innovative ACFM measurement apparatus based on the foregoing teaching. Two types of apparatus will now be described. The first type utilises digital electronics whilst the second type is implemented utilising analogue electronics.

Digital implementation

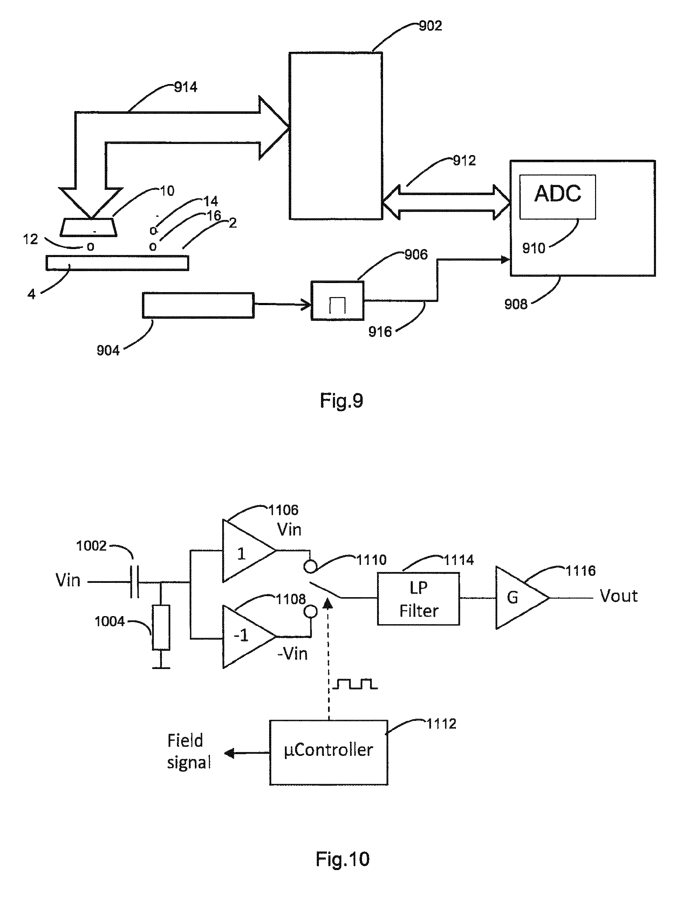

An embodiment of the present invention utilising digital electronic instrumentation will now be described with reference to the schematic illustration of figure 9. The setup and calibration mode of a sensor head 10 will first be described. Sensor head 10 is shown located above inspection piece 2 and coupled via an interface bus 914 to an interface module 902 which provides signals and power to and receives signals from the sensor head 10. Power for alternating magnetic field generating coil 6 is provided by power supply 904 which supplies an a.c. current, typically 100mA, at a frequency in the range 5 - 100kHz. The power supply has constant current drive circuitry to ensure that the current flowing in the inducer coil 6 is constant, even if the impedance of the inducer coil 6 changes due to proximity to the conductor surface, and so the resultant magnetic field is constant in strength at the sensor. Thus, the field in the limited area around the sensors may be considered predominately uniform in direction at this location due to the orientation of the inducer coil 6.

A phase measurement module 906 is coupled to the output of power supply 904 for monitoring the phase of the power supply signal.

The phase measurement module 906 outputs a signal representative of the phase of the power supply signal to Digital Signal Processing (DSP) module 908 which acts as a synchronisation trigger for the DSP circuitry. Typically, the signal supplied to the DSP 908 is a sample of the power supply signal. The power supply current is coupled to interface module 902. DSP module 908 is coupled to interface module 902 via a signal bus 912 and amongst other things receives a signal over the signal bus 912 representative of the signal from sensor coil 8. The signal representative of the signal from sensor coil 8 is input to an Analogue to Digital Converter (ADC) sub-module 910 of DSP module 908. The digital signal output from ADC 910 undergoes processing in the DSP module circuitry in the ACFM setup and measurement mode of the apparatus as will now be described.

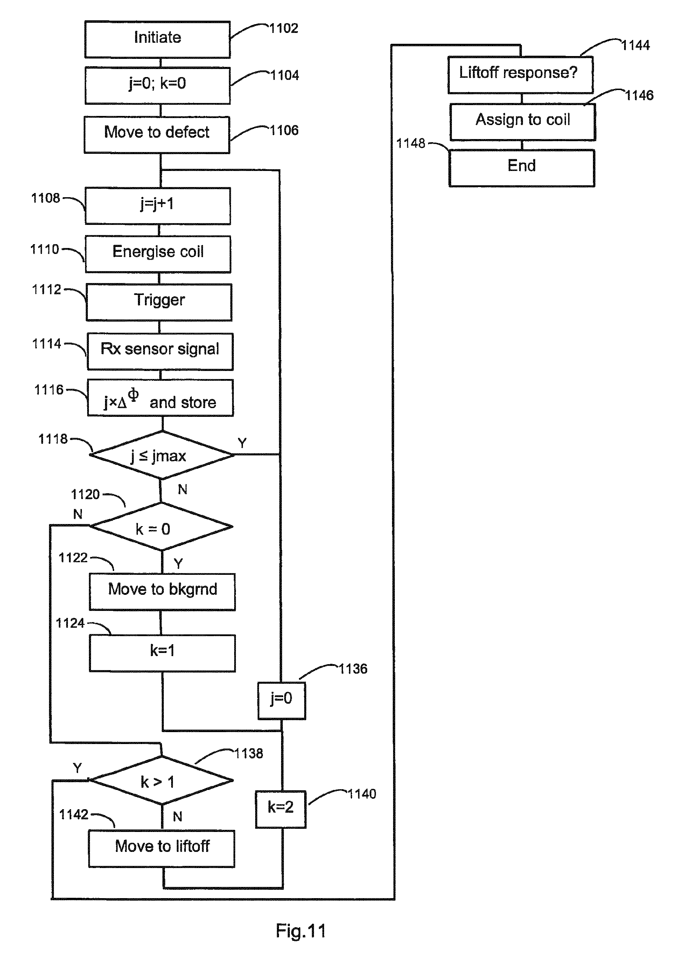

The electronic instrumentation is under the control of the DSP module 908 which is configured to operate in accordance with the process flow control diagram illustrated in figure 11 for the setup and calibration mode. The test inspection piece 2 is fixed in a jig disposed at a known position relative to the apparatus and sensor head 10 so that the sensor head 10 may be moved to respective positions relative to the test inspection piece 2. At step 1102 the apparatus is initiated by moving the sensor head 10 to a start position relative to a test inspection piece, 2. Counters "j" and "k" are initiated zero at step 1104.

At step 1106, the DSP module 908 output signals across interface module 902 to cause sensor head 10 to be moved to the region of defect 4 and at a height, 12, at which the magnetic field strength may be measured for the defect. A phase sweep loop begins at step 1108 where counter "j" is increased by one and subsequently DSP module 908 energises coil 6 at step 1110 by controlling the supply of an alternating current signal from power supply 904 through interface module 902 to sensor head 10 via interface bus 914. The phase of the alternating current signal from power supply 104 is utilised as a trigger at step 1112 to initiate receiving the magnetic field, Bx, sensor signal.

At step 1114 the magnetic field, Bx, sensor signal is received at DSP module 908 and converted to a digital signal representative of Bx in ADC module sub-module 910. At step 1116 the digital signal is processed in accordance with equation 17 using a β value equal to a phase shift of jx ΔØ relative to the trigger in step 1112. The sensed signal is shifted by j ×ΔØ in the ADC sub-module 910 circuitry and the value of ACFM calculated according to equation 17 is stored. At step 1118 counter "j" is checked to determine if it has reached a maximum value and if not process flow control is returned to the start of the phase sweep loop at step 1108 where the counter value "j" is increased by one. The process flow control then repeats steps 1110 to 1116 where the magnetic field, Bx, signal is shifted ADC sub-module 910 by a number of phase shift steps of ΔØ at step 1116 according to the updated value of "j". At step 1118 the value of counter "j" is tested to see if it has exceeded a maximum value and if not the process flow control proceeds around the phase sweep loop until such time as the value of counter "j" exceeds the maximum value.

When counter "j" exceeds its maximum value process flow control proceeds to step 1120 where counter "k" is tested to determine if it is equal to zero. If counter "k" equals zero then process flow control proceeds to step 1122 where control module 908 output signals to move the sensor head 10 to the background measurement position, 16, the value of "k" is made equal to 1 as step 1124 and process flow control then proceeds to step 1136 where counter "j "is set to zero.

Process flow control then proceeds to the start of the phase sweep loop at step 1108 where the value of counter "j "is increased by one and coil 6 energised as step 1110. Process flow continues around the phase sweep loop increasing the phase shift at step 1116 on each pass through the loop until a maximum number of passes has been exceeded. Once the maximum number of passes has been exceeded, i.e. "j" is greater than a maximum value, process flow control flows, at step 1118, to step 1120 where process flow control proceeds to step 1138 since the value of counter "k "is not equal to zero. At step 1138 it is determined whether or not counter "k" is equal to 1. If the outcome at step 1138 is yes then process flow control moved to step 1142 where the control module 908 issues control signals to move sensor head 10 to the liftoff position, 14.

Process flow control then proceeds to step 1140 where counter "k" is assigned a value 2, and then onto step 1136 where counter "j" is assigned the value zero. Process flow control then proceeds to the start of the phase sweep loop at step 1108 and proceeds around that loop until the value of counter "j" exceeds the maximum value at step 1118. For counter "j" exceeding the maximum value at step 1118 process flow control proceeds to step 1120 where it is determined if counter "k" is equal to zero. At this stage of the process counter "k" is equal to 2 and so the outcome at step 1120 is NO and process flow control proceeds to step 1138 where the outcome is also NO and process flow control proceeds to step 1144. At this stage, the phase sweep measurement at each of the defect, background and liftoff locations has been completed. The process now proceeds to identify the phase shift (β= j ×ΔØ) which gives the smallest value of liftoff response while maintaining a measured ACFM defect value close to a maximum defect value (optimal liftoff response).

Identification of the optimal liftoff response may be achieved by simple inspection of the stored values, step 1144.

At step 1146, the optimal phase shift value β is recorded for the particular sensor head 10, or coil 6 if plural coils are utilised in sensor head 10, undergoing calibration and the process ends at step 1148.

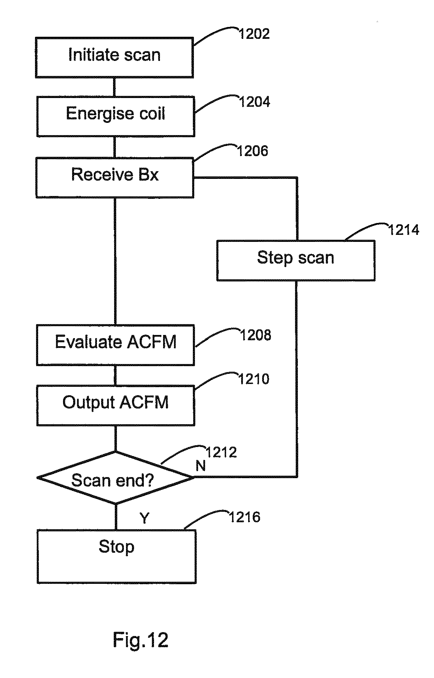

The implementation of the digital approach to measuring a defect using a calibrated sensor head will now be described with reference to the process flow control diagram of figure 12.

Inspection of a piece is initiated at step 1202 and coil 6 energised at step 1204. A signal corresponding to the magnetic field sensed by sensor coil 8 is received at DSP module 908and digitised in ADC sub-module 910 at step 1206.

The value corresponding to the magnetic field strength is utilised in the DSP 908 to evaluate a lift-off response compensated ACFM value in accordance with equation (17) derived above and utilising the value β previously calibrated for the sensor coil 10 at step 1208. The lift-off response compensated ACFM value is output to a display in real-time at step 1210. Process flow control then proceeds to step 1212 where it is determined whether or not the scan of the inspection piece has ended. If not, process flow control proceeds to step 1214 where the sensor head 10 is stepped to the next position in the scan and a signal corresponding to the magnetic field sensed by sense coil 8 at the new position is received by DSP 908 at step 1206. Process flow control then moves through the steps of phase shifting the signal and evaluating and storing the lift-off response compensated ACFM value for the phase shifted signal. The stepped scan proceeds around the loop of steps 1206 through 1214 and back to step 1206 until the scan is determined at step 1212 to have ended. Process flow control then proceeds to step 1216 where the scan process is stopped. Optionally, the lift-off response compensated ACFM values are stored for output to a computer apparatus and/or a display (for example of the computer apparatus) during or after the scan procedure.

Analogue Implementation

In another embodiment in accordance with the present invention analogue circuitry is utilised. This embodiment will now be described with reference to figure 10. The arrangement illustrated in figure 9 is modified by replacing the digital analysis circuitry with the analogue circuitry schematically illustrated in figure 10. The signal from the sensor 8 is input as a voltage Vin to the circuitry either directly or through interface module 902 as illustrated in figure 9. The signal from sensor 8 is preconditioned with a Wien bridge band pass filter (not shown) with a selectable centre frequency within the range 5-100 depending upon the frequency of the alternating current utilised for energising coil 6. Any DC offset is removed with a simple RC circuit 2002, 1004. The signal is input to respective input of a pair of operational amplifiers 1106, 1108. Operational amplifier 1108 is configured such that a second input signal is generated which is negative with respect to the original input signal.

Respective outputs from operational amplifiers 1106 and 1108 are output to respective poles of a two pole switch 1110. A TTL square wave with a 50% duty cycle is generated by a microcontroller 1112 and input to the control of switch 1110. The phase ($\beta$) of this waveform can be adjusted by the controller 1112 configured in the software controlled in a microcontroller. The same microcontroller outputs a signal which is utilised to provide an energisation signal to coil 6 for generating the alternating field and also uses the output signal as the phase reference.

The output from switch 1110 is fed to a final stage 1114 comprising two active second order low pass filters using a Sallen Key structure. The first filter has a cut-off frequency of 868Hz, a gain of 1.08, and a quality factor of 0.52; the second filter has a cut-off frequency of 995Hz, a gain of 1.59, and a quality factor of 0.70. The final low pass filter smooths the signal to the point where it becomes a DC signal between $\pm 5$V. The DC signal is amplified by gain element 1116 to output a lift-off response compensated ACFM value Vout.

Insofar as embodiments of the invention described above are implementable, at least in part, using a software-controlled programmable processing device such as a general purpose processor or special-purposes processor, digital signal processor, microprocessor, or other processing device, data processing apparatus or computer system it will be appreciated that a computer program for configuring a programmable device, apparatus or system to implement the foregoing described methods, apparatus and system is envisaged as an aspect of the present invention. The computer program may be embodied as any suitable type of code, such as source code, object code, compiled code, interpreted code, executable code, static code, dynamic code, and the like. The instructions may be implemented using any suitable high-level, low-level, object-oriented, visual, compiled and/or interpreted programming language, such as C, C++, Java, BASIC, Perl, Matlab, Pascal, Visual BASIC, JAVA, ActiveX, assembly language, machine code, and so forth. A skilled person would readily understand that term "computer" in its most general sense encompasses programmable devices such as referred to above, and data processing apparatus and computer systems.

Suitably, the computer program is stored on a carrier medium in machine readable form, for example the carrier medium may comprise memory, removable or non-removable media, erasable or non-erasable media, writeable or re-writeable media, digital or analog media, hard disk, floppy disk, Compact Disk Read Only Memory (CD-ROM), Company Disk Recordable (CD-R), Compact Disk Rewriteable (CD-RW), optical disk, magnetic media, magneto-optical media, removable memory cards or disks, various types of Digital Versatile Disk (DVD) subscriber identity module, tape, cassette solid-state memory. The computer program may be supplied from a remote source embodied in the communications medium such as an electronic signal, radio frequency carrier wave or optical carrier waves. Such carrier media are also envisaged as aspects of the present invention.

As used herein any reference to "one embodiment" or "an embodiment" means that a particular element, feature, structure, or characteristic described in connection with the embodiment is included in at least one embodiment. The appearances of the phrase "in one embodiment" or the phrase "in an embodiment" in various places in the specification are not necessarily all referring to the same embodiment.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the invention. This is done merely for convenience and to give a general sense of the invention. This description should be read to include one or at least one and the singular also includes the plural unless it is obvious that it is meant otherwise.

In view of the foregoing description it will be evident to a person skilled in the art that various modifications may be made within the scope of the invention. Although embodiments are described with a power signal of 100mA supplied to the ac field generating coil at a frequency of 5kHz, the signal may be delivered at any suitable current or frequency, for example the current may range from 10mA to 1A and the frequency from 1 kHz to 100 kHz. Although embodiments in accordance with the present invention have been described with reference to the sensor head arrangement 10 illustrated in figure 1 other sensor head arrangements may be utilised. For example, multiple sense coils may be utilised and/or multiple a.c. field generating coils. In particular, but not exclusively, sensor head arrangements such as disclosed in the applicant's prior disclosures in international patent application publication number WO 92/12422 and UK patent application publication number GB 2 286 678.

Specific inspection liftoff distances have been described when describing specific embodiments of the invention. However, the distances described are typical distances and the distances can vary for different probe types which have different sized sensors, e.g. different sized coils and different "protection" thickness between the coil and sample. In particular, dimensions indicated on the accompanying drawings should not be construed as limiting and one or more embodiments in accordance with the invention may utilise, involve or otherwise be concerned with dimensions outside those indicated in the accompanying drawings. The sensor may be of one or more types, for example a coil, a Hall effect sensor or a Giant-Magneto Resistive (GMR) sensor.

Although the terms "test" and "inspection" have been used when referring to items being tested or inspected, such terms should not be considered limiting in terms of the examples and illustrations of embodiments invention that may be taught. Additionally, although specific process control flows have been described, other process control flows may be used in implementing one or more embodiments of the present invention.

The scope of the present disclosure includes any novel feature or combination of features disclosed therein either explicitly or implicitly or any generalisation thereof irrespective of whether or not it relates to the claimed invention or mitigate against any or all of the problems addressed by the present invention. The applicant hereby gives notice that new claims may be formulated to such features during prosecution of this application or of any such further application derived therefrom. In particular, with reference to the appended claims, features from dependent claims may be combined with those of the independent claims and features from respective independent claims may be combined in any appropriate manner and not merely in specific combinations enumerated in the claims.

Other aspects and embodiments are set forth in the following clauses:

Operation

1. An a.c. field measurement system, comprising:

an arrangement for inducing an a.c. field in a conductor;

a sensor responsive to the a.c. field to produce a signal indicative of the a.c. field; and

circuitry configured to apply a phase shift to the signal by an amount suitable to reduce a component of the signal dependent on the distance of the sensor from the conductor.

2. An a.c. field measurement system according to clause 1, wherein the signal is indicative of a defect in the conductor.

3. An a.c. field measurement system according to clause 2, wherein the distance of the sensor from the conductor is the distance from a surface of the conductor opposing the sensor.

4. An a.c. field measurement system according to any preceding clause, wherein the sensor is configured to be movable in a direction across the conductor.

5. An a.c. field measurement system according to clause 4 dependent on clause 3, wherein the sensor is further configured to be movable relative to the conductor in a direction substantially parallel to the surface of the conductor.

6. An a.c. field measurement system according to clause 5, further comprising a carriage for moving the sensor and/or the conductor.

7. An a.c. field measurement system according to any preceding clause, wherein the arrangement is configured to induce an a.c. field of uniform field strength.

8. An a.c. field measurement system according to clause 7, wherein the a.c. field is of uniform field strength over an area sufficiently large to smooth out local variations in the surface geometry of the conductor but sufficiently small to resolve curvature or other gross geometry effects of the conductor.

Calibration

9. An a.c. field measurement system, comprising:

an arrangement for inducing an a.c. field in a conductor;

a sensor, for example at least one coil, responsive to the a.c. field to produce a signal indicative of the a.c. field; and

circuitry configured to phase shift the signal across a range of phases for a specific location of the sensor relative to the conductor.

10. An a.c. field measurement system according to clause 9, wherein the specific location is a one of: a defect in the conductor; a non-defect part of the conductor; and a location away from the conductor.

11. An a.c. field measurement system according to clause 10, configured to evaluate:

a defect response for respective phase shift values in the range of phases corresponding to the difference between the signal when the location is a defect in the conductor and the signal when the location is a non-defect part of the conductor; and

a liftoff response for respective phase shift values in the range of phases corresponding to the difference between the signal when the location is away from the conductor and the signal when the location is a non-defect part of the conductor.

12. An a.c. field measurement system according to clause 11, further comprising processor circuitry configured to determine from the range of defect responses and liftoff responses a phase shift value for which the liftoff response is small and the defect response is relatively large.

Operation

13. A method for a.c. field measurement, comprising:

inducing an a.c. field in a conductor;

sensing a signal indicative of the a.c. field; and

applying a phase shift to the signal by an amount suitable to reduce a component of the signal dependent on the distance from the conductor at which sensing occurs.

14. A method according to clause 13, wherein the signal is indicative of a defect in the conductor.

15. A method according to clause 13 or 14, wherein the distance from the conductor is the distance from a surface of the conductor.

16. A method according to any of clauses 13 to 15, further comprising moving the position at which sensing occurs in a direction across the conductor.

17. A method according to clause 16 dependent on clause 15, further comprising moving the sensing position relative to the conductor in a direction substantially parallel to the surface of the conductor.

18. A method according to any of clause 13 to 17, further comprising inducing an a.c. field of uniform field strength.

19. A method according to clause 18, wherein the a.c. field is of uniform field strength over an area sufficiently large to smooth out local variations in the surface geometry of the conductor but sufficiently small to resolve curvature or other gross geometry effects of the conductor.

Calibration

20. A method for an a.c. field measurement system, comprising:

inducing an a.c. field in a conductor;

sensing a signal indicative of the a.c. field; and

phase shifting the signal across a range of phases for a specific location of performing sensing relative to the conductor.

21. A method according to clause 20, wherein the specific location is a one of: a defect in the conductor; a non-defect part of the conductor; and a location away from the conductor.

22. A method according to clause 21, further comprising evaluating:

a defect response for respective phase shift values in the range of phases corresponding to the difference between the signal when the location is a defect in the conductor and the signal when the location is a non-defect part of the conductor; and

a liftoff response for respective phase shift values in the range of phases corresponding to the difference between the signal when the location is away from the conductor and the signal when the location is a non-defect part of the conductor.

23. A method according to clause 22, further comprising determining from the range of defect responses and liftoff responses a phase shift value for which the liftoff response is small and the defect response is relatively large.

24. A computer program comprising computer program elements operative in a computer to implement the method of clause 22 or clause 23.

**Claims**

1. An a.c. field measurement system, comprising:

an arrangement for inducing an a.c. field in a conductor;
a sensor responsive to the a.c. field to produce a signal indicative of the a.c. field; and
circuitry configured to apply a phase shift to the signal by an amount suitable to reduce a component of the signal dependent on the distance of the sensor from the conductor.

2. An a.c. field measurement system according to claim 1, wherein the signal is indicative of a defect in the conductor.

3. An a.c. field measurement system according to any preceding claim, wherein the circuitry comprises a processor.

4. An a.c. field measurement system according to claim 3, wherein the processor comprises a digital signal processor.

5. An a.c. field measurement system according to any of claim 3 or 4, wherein the processor is configured to evaluate the following relationship:

$$ACFM = 2f \int_{-\frac{\beta}{2\pi f}}^{\frac{1}{2f}-\frac{\beta}{2\pi f}} Bx(t)\, dt$$

where *f* is the frequency of the induced field, β is the phase shift applied to the signal, *Bx(t)* is the value of the signal indicative of the a.c. field and *ACFM* is the alternating current field measurement value.

6. An a.c. field measurement system according to any of claims 1 to 5, wherein the circuitry comprises a circuit arrangement configured to switch between the signal and the inverse of the signal at the same frequency as the a.c. field at a phase relative to the phase of the a.c. field by the amount suitable to reduce a component of the signal dependent on the distance of a sense coil from the conductor.

7. An a.c. field measurement system according to claim 6, wherein the circuit arrangement comprises a switch responsive to an a.c. signal at the same frequency as the a.c. field to switch between a first and second pole respectively coupled to the signal and the inverse of the signal.

8. An a.c. field measurement system according to claim 7, wherein the signal is input to a circuit element having a positive gain polarity and a circuit element having a negative gain polarity the output of respective circuit elements coupled to respective poles of the switch.

9. An a.c. field measurement system according to claim 8, wherein respective circuit elements comprise an operational amplifier and an operational amplifier configured as an inverter.

10. An a.c. field measurement system according to any of claims 6 to claim 9, wherein the switched signal is output to a low pass filter for removing a d.c component.

11. An a.c. field measurement system according to any preceding claim, wherein the sensor comprises a plurality of coils producing respective signals indicative of the a.c. field and wherein a respective phase shift is applied to the signal from each coil.

12. A method for a.c. field measurement, comprising:

    inducing an a.c. field in a conductor;
    sensing a signal indicative of the a.c. field; and
    applying a phase shift to the signal by an amount suitable to reduce a component of the signal dependent on the distance from the conductor at which sensing occurs.

13. A method according to claim 12, wherein the signal is indicative of a defect in the conductor.

14. A method according to any of claims 12 or 13, further comprising evaluating the following relationship:

$$ACFM = 2f \int_{-\frac{\beta}{2\pi f}}^{\frac{1}{2f}-\frac{\beta}{2\pi f}} Bx(t)\, dt$$

where f is the frequency of the induced field, β is the phase shift applied to the signal, *Bx(t)* is the value of the signal indicative of the a.c. field and *ACFM* is the alternating current field measurement value.

15. A method according to any of claims 12 to 14, further comprising sensing a plurality of signals indicative of the a.c. field and applying a respective phase shift to respective signals.

16. An a.c. field measurement system according to any of claims 1 to 12, wherein the sensor is a one of a coil, a Hall effect sensor and a Giant-Magneto Resistive sensor.

17. A computer program comprising computer program elements operative in a computer to implement the method of claim 14.

Fig. 1

Fig. 2

Fig. 3

Fig. 4

**Square wave in phase
with sine wave**

(a)

**Square wave multiplied
with sine wave**

(b)

Fig. 5

**Liftoff, Defect and Background Signals against phase**

602 — background signal

604 – defect signal

606 – liftoff signal

Fig. 6

**Liftoff and Defect Responses**

Fig. 7

Fig. 8

Fig.9

Fig.10

Fig.11

Fig.12

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 124 043 A1 (SUMITOMO METAL IND [JP]) 25 November 2009 (2009-11-25) * abstract * * figures 1,3 * * paragraphs [0023] - [0036] * ----- | 1-17 | INV. G01N27/90 |
| A | JP 2003 232776 A (MARKTEC CORP) 22 August 2003 (2003-08-22) * abstract * * paragraphs [0030] - [0036] * ----- | 1-17 | |
| A | MANDACHE C ET AL: "Transient and harmonic eddy currents: Lift-off point of intersection", NDT & E INTERNATIONAL, BUTTERWORTH-HEINEMANN, OXFORD, GB, vol. 39, no. 1, 1 January 2006 (2006-01-01), pages 57-60, XP027969122, ISSN: 0963-8695 [retrieved on 2006-01-01] * the whole document * ----- | 1-17 | |

TECHNICAL FIELDS
SEARCHED    (IPC)

G01N

The present search report has been drawn up for all claims

| Place of search | Date of completion of the search | Examiner |
|---|---|---|
| Munich | 22 July 2015 | Ruchaud, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 16 1205

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2015

| Patent document cited in search report | | Publication date | Patent family member(s) | | Publication date |
|---|---|---|---|---|---|
| EP 2124043 | A1 | 25-11-2009 | EP | 2124043 A1 | 25-11-2009 |
| | | | JP | 4998820 B2 | 15-08-2012 |
| | | | JP | 2008224494 A | 25-09-2008 |
| | | | US | 2010134099 A1 | 03-06-2010 |
| | | | WO | 2008126553 A1 | 23-10-2008 |
| JP 2003232776 | A | 22-08-2003 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9212422 A
- EP 0566624 A

- GB 2286678 A